# EUROPEAN PATENT SPECIFICATION

(11) **EP 2 169 239 B1**
(45) Date of publication and mention of the grant of the patent: **06.01.2016**
(21) Application number: 08777569.8
(22) Date of filing: 25.06.2008
(51) Int. Cl.: F16B 2/18, F16B 7/04

(54) **CLAMP**
KLEMME
PINCE

(30) Priority: 27.06.2007 JP 2007169498
(43) Date of publication of application: 31.03.2010
(73) Proprietor: Sumco Techxiv Corporation, Omura-shi, Nagasaki 856-8555 (JP)
(72) Inventor: NISHIMURA, Tomokazu, Omura-shi Nagasaki 856-8555 (JP)
(74) Representative: Cabinet Plasseraud
(86) International application number: PCT/JP2008/061512
(87) International publication number: WO 2009/001839

(56) References cited:
- DE-B- 1 189 323
- JP-A- 57 061 806
- JP-U- 52 010 274
- JP-U- 56 169 246
- JP-Y- S 451 837
- JP-Y- S4 931 331
- US-A1- 2008 034 561

## Description

### TECHNICAL FIELD

The present invention relates to a clamp that connects end portions of tubular members.

### BACKGROUND ART

Conventionally, as a clamp for connecting end portions of two tubular members, a clamp is known that includes two annular members rotatably connected, engages a male screw member disposed in an end portion of one of the annular members with an end portion of another of the annular members, and fastens and fixes the end portions of the two tubular members by screwing the male screw member.

However, with a conventional clamp, a male screw member must be disposed on an operator side to perform a fastening operation. Consequently, an operation of transferring the clamp to an opposite side to the operator side with respect to the tubular member, and opening the clamp on the opposite side and fixing the clamp to the two tubular members has been required. The conventional clamp has the abovementioned operating difficulties when fixed to end portions of two tubular members. A clamp of this type is disclosed in DE1189323B.

On the other hand, a clamp coupling composed of two separated clamp hands is proposed (for example, refer to Patent Document 1). More specifically, there is proposed a clamp coupling, in which a rib portion having an opening in an end portion of each of two clamp hands is formed, the clamp coupling being fixed by a bolt member inserted into the opening and a nut member screwed on the bolt member.

Patent Document 1: Japanese Unexamined Patent Application Publication No. H8-14454

### DISCLOSURE OF THE INVENTION

### Problems to be solved by the invention

Here, with the clamp coupling disclosed in Patent Document 1, there was a problem in that, although an attaching operation thereof is easy, a fastening process of a bolt for connecting end portions of the two tubular members is difficult. More specifically, there is a problem in that, since a plurality of members is required for fastening the bolt, a preliminary operation for fastening the bolt is required. In addition, there is a problem in that, since there is a plurality of portions where the bolt is to be fastened, a plurality of fastening processes is required. Furthermore, there is a problem in that, since bolts are disposed close to and parallel to the tubular member, the tubular member interfered with the fastening operation of the bolt so that the operation of fastening the bold is difficult.

The object of the present invention is providing a clamp that can connect end portions of two tubular members by a simple operation.

### Means for Solving the Problems

The present invention relates to a clamp for connecting a first tubular member having a circular flange formed in an end portion thereof with a second tubular member having a circular flange (512) formed in an end portion thereof, in a state where the circular flanges face each other and by covering outer peripheries of the circular flanges with the clamp, the clamp comprising: a support member; a first arm having an end pivotally supported by the support member ;a second arm disposed to face the first arm, having an end pivotally supported by the support member; a first concave portion formed on the first arm on a side facing the second arm and formed in a curved shape corresponding to the circular flanges to fit a first region along the outer peripheries of the circular flanges; a second concave portion formed on the second arm on a side facing the first arm and formed in a curved shape corresponding to the circular flanges to fit a second region along the outer peripheries of the circular flanges; a connection member connecting the first arm and the second arm; characterized in that the clamp further comprises: a first guide portion formed close to the end of the first arm and engaged with a first end of the connection member through a first engaging member; and a second guide portion formed close to the end of the second arm and engaged with a second end of the connection member through a second engaging member; a third concave portion formed on the connection member on an opposite side to the support member side, to fit a third region along the outer peripheries of the circular flanges; wherein the connection member is movable away from or toward the support member while maintaining a distance between the first engaging member and the second engaging member, and
wherein the first guide portion and the second guide portion are each formed of a first long hole and a second long hole respectively such that a distance therebetween in a direction vertical to a moving direction of the connection member becomes greater with movement away from the support member; and wherein in a case where the connection member moves away from the support member, the first arm and the second arm each pivotally move so as to approach each other; in a case where the connection member moves toward the support member, the first arm and the second arm each pivotally move so as to away from each other.

In addition, it is preferable that the clamp further includes a connecting portion transfer means that transfers the connection member.

In addition, it is preferable that the connecting portion transfer means includes a female screw portion that is formed on the support member or on a member fixed to the support member, and a male screw portion that is screwed on the female screw portion, and has an end portion in contact with the connection member, and is configured so that the connection member is moved away from or toward the support member by rotating the male screw portion.

In addition, in a state where the clamp connects the first tubular member and the second tubular member, it is preferable that a first end portion of the first arm on a side having the first concave portion opposite to the support member side and a second end portion of the second arm on a side having the second concave portion opposite to the support member side contact each other.

In addition, in a state where the clamp connects the first tubular member and the second tubular member, it is preferable that a first end portion of the first arm on a side having the first concave portion opposite to the support member side and a second end portion of the second arm on a side having the second concave portion opposite to the support member side are spaced apart from each other, and a ratio of a length of the outer peripheries of the flanges disposed between the first end portion and the second end portion is no greater than 0.17 with respect to a length of the entire outer peripheries of the flanges.

### Effects of the Invention

An object of the present invention is providing a clamp that can connect end portions of two tubular members by a simple operation.

### BRIEF DESCRIPTION OF THE DRAWINGS

FIG. 1 is a planar view of a clamp 1 in an open state;
FIG. 2 is a side view of the clamp 1 in an open state;
FIG. 3 is a perspective view of the clamp 1 in an open state;
FIG. 4 is a planer view of the clamp 1 in a closed state;
FIG. 5 is a planar view of a state where the clamp 1 in an open state is positioned on a flange of a tubular member;
FIG. 6 is a side view of a state where the clamp 1 in an open state is positioned on a flange of the tubular member;
FIG. 7 is a side view of a state where the clamp 1 in an open state is positioned on a flange of the tubular member, seen from a grip portion 17 side;
FIG. 8 is a perspective view of a state where the clamp 1 in an open state is positioned on a flange of the tubular member;
FIG. 9 is a perspective view of a state where the clamp 1 in the open state shown in FIG. 8 is being shifted to a closed state;
FIG. 10 is a perspective view of a state where the clamp 1 in a closed state (connected state) is disposed so that arms thereof cover the flange of the tubular member;
FIG. 11 is a planar view of a state where the clamp 1 in a closed state (connected state) is disposed so that arms thereof cover the flange of the tubular member;
FIG. 12 is a cross-sectional view of a state where a first tubular member and a second tubular member are disposed so that flanges thereof face each other;
FIG. 13 is a cross-sectional view of a state where the clamp 1 is attached to outer peripheries of the flanges in FIG. 12;
FIG. 14 is a cross-sectional view of a state where the clamp 1 is further shifted to a closed state from a state shown in FIG. 13; and
FIG. 15 is a planar view of a state where the clamp 1 in a closed state (connected state) is disposed so that arms thereof cover the flange of the tubular member, in a state where a tip of a first arm and a tip of a second arm are spaced apart from each other.

### EXPLANATION OF REFERENCE NUMERALS

1 Clamp
3 Support member
5 First arm
6 Second arm
7 First long hole
8 Second long hole
9 First pin member
10 Second pin member
11 Connection member
13 Nut
13a Female screw portion
15 Male screw portion
17 Grip portion
501 First tubular member
501 Second tubular member
511 First flange
512 Second flange

### PREFERRED MODE FOR CARRYING OUT THE INVENTION

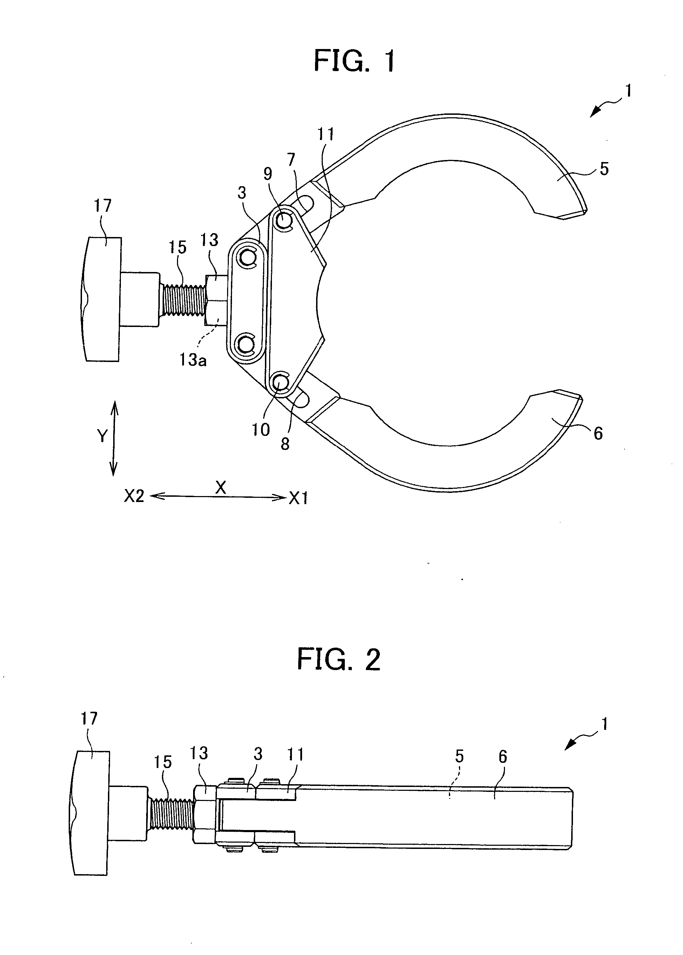

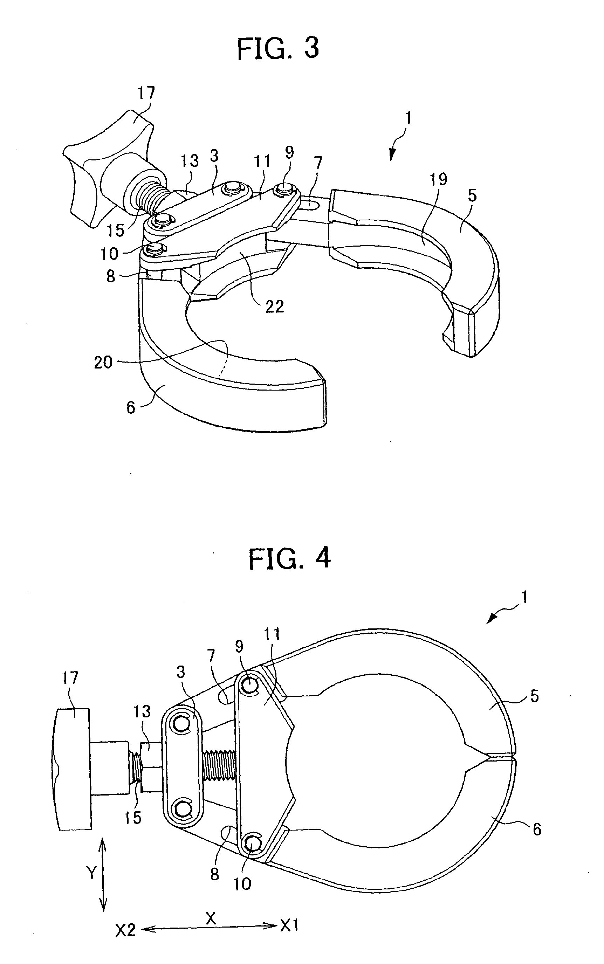

An embodiment of the present invention is described hereinafter with reference to the drawings. First, a structure of a clamp 1 according to the present embodiment is described with reference to FIGS. 1 to 4. FIG. 1 is a planar view of a clamp 1 in an open state. FIG. 2 is a side view of the clamp 1 in an open state. FIG. 3 is a perspective view of the clamp 1 in an open state. FIG. 4 is a planar view of the clamp 1 in a closed state. Here, the clamp 1 according to the present embodiment is, in a state where a first tubular member with a circular flange formed in an end portion thereof and a second tubular member with a circular flange formed in an end portion thereof are disposed such that the flanges thereof face each other, a clamp that connects by covering outer peripheries of the two flanges with a first arm and a second arm.

As shown in FIGS. 1 to 4, the clamp 1 includes: a support member 3; a first arm 5 having a first end pivotably supported by the support member 3; a second arm 6 disposed to face the first arm 5, having a first end pivotably supported by the support member 3; a first long hole 7 as the first guide portion that is formed on the support member 3 side of the first arm 5; a second long hole 8 as the second guide portion that is formed on the support member 3 side of the second arm 6; and an connection member 11 including a first pin member 9 as the first engaging member inserted into and engaged with the first long hole 7 and a second pin member 10 as the second engaging member inserted into and engaged with the second long hole 8.

The clamp 1 is configured so that the connection member 11 can move away from and/or move toward the support member 3. The clamp 1 includes a screw mechanism as the connecting portion transfer means that allows the connection member 11 to move as described above. More specifically, the clamp 1 includes a female screw portion 13a (not shown) that is formed on a nut 13 fixed to the support member 3 and a male screw portion 15 that is screwed on the female screw portion 13a and of which an end portion contacts the connection member 11. In addition, a grip portion 17 for rotating the male screw portion 15 is disposed in an end portion of the male screw portion 15 on an opposite side to the connection member 11.

The support member 3 pivotably supports a first end of the first arm 5. In addition, the support member 3 pivotably supports a first end of the second arm 6. Portions of the support member 3 that pivotably support the first arm 5 and the second arm 6 respectively act as fulcrums for opening and closing action of the first arm 5 and the second arm 6 respectively. Furthermore, the nut 13 is fixed to the support member 3 on an opposite side to a side on which the first arm 5 and the second arm 6 are disposed. An opening (not shown), into which the male screw portion 15 that is screwed on the female screw portion 13a formed on the nut 13 is inserted, is formed in the support member 3. In other words, the male screw portion 15 is disposed on the support member 3 so as to penetrate the support member 3.

The first end of the first arm 5 is pivotably supported by the support member 3. Meanwhile, the second arm 6 is disposed to face the first arm 5 and the first end thereof is pivotably supported by the support member 3. The first arm 5 and the second arm 6 are each formed in a curved shape, such that sides facing each other are concave. More specifically, the first arm 5 and the second arm 6 are each formed in an arc-like shape along outer peripheries of the two flanges facing each other, to which the clamp 1 (described later) is to be attached.

In addition, as shown in FIG. 3, the first arm 5 includes a first concave portion 19, which is formed on a side facing the second arm 6, into which a part of the outer peripheries of the two flanges fits. In addition, the second arm 6 includes a second concave portion 20, which is formed on a side facing the first arm 5, into which a part of the outer peripheries of the two flanges fits. The first concave portion 19 and the second concave portion 20 are formed so that width thereof narrows as outer sides are approached from inner sides, the inner sides facing each other and the outer sides being opposite to the inner side. In other words, the first concave portion 19 and the second concave portion 20 are each formed so as to make a distance between the two flanges smaller, as the two flanges that fit into the first concave portion 19 and the second concave portion 20 fit in more deeply.

In addition, as shown in FIG. 4, the first arm 5 and the second arm 6 are formed so that tips thereof contact each other in a case where the clamp 1 is in a closed state while the two flanges fit into the first concave portion 19 and the second concave portion 20. This can inhibit breakage of the flanges and the arms due to over-fastening.

As shown in FIGS. 1, 3 and 4, the first long hole 7 is formed in the first arm 5 on a support member 3 side. The second long hole 8 is formed in the second arm 6 on the support member 3 side. As shown in FIGS. 1 and 4, the first long hole 7 and the second long hole 8 are each formed to extend in a direction intersecting with a moving direction X of the connection member 11 (described later). More specifically, the first long hole 7 and the second long hole 8 are each formed so that a distance therebetween in a direction Y vertical to the moving direction X becomes greater with movement away from the support member 3. The first long hole 7 and the second long hole 8 are formed so that they are inclined towards each other, with the distance therebetween increasing with movement in a direction X1 with respect to the moving direction X.

Speed of pivotal movement (opening and closing) of the first arm 5 and the second arm 6 is determined by angles between directions in which the first long hole 7 and the second long hole 8 extend respectively and the moving direction X. More specifically, in a case where the angles between the directions in which the first long hole 7 and the second long hole 8 extend respectively and the moving direction X is large, the speed of pivotal movement of the first arm 5 and the second arm 6 is large. In other words, the speed of opening and closing of the clamp 1 becomes greater in such a configuration. On the other hand, in a case where the angles between the directions in which the first long hole 7 and the second long hole 8 extend respectively and the moving direction X is small, the speed of pivotal movement of the first arm 5 and the second arm 6 is low. In other words, the speed of opening and closing of the clamp 1 becomes lower in such a configuration.

Here, length of each of the first long hole 7 and the second long hole 8 is determined by diameter of a flange for attaching, length of the support member 3 in a direction Y, angle between directions in which the first long hole 7 and the second long hole 8 extend respectively and the moving direction X, and the like.

The first pin member 9 is inserted into and engaged with the first long hole 7. In addition, the second pin member 10 is inserted into and engaged with the second long hole 8. The first pin member 9 and the second pin member 10 are metallic cylindrical members. The first pin member 9 is inserted into the first long hole 7 and transfer thereof is guided by the first long hole 7. The second pin member 10 is inserted into the second long hole 8 and transfer thereof is guided by the second long hole 8. The first pin member 9 and the second pin member 10 are fixed at both ends in the direction Y of the connection member 11.

The connection member 11 fixes the first pin member 9 and the second pin member 10 while maintaining a distance therebetween. The connection member 11 is configured to be movable in the moving direction X while maintaining a distance in the direction Y between the first pin member 9 and the second pin member 10.

An end portion of the male screw portion 15 contacts the support member 3 side of the connection member 11. As the male screw portion 15 is rotated, the end portion thereof moves in the moving direction X and moves the connection member that contacts the end portion 11 in the moving direction X. More specifically, the connection member 11 is moved toward X1 in the moving direction X away from the support member 3 by the male screw portion 15, and toward X2 in the moving direction X toward the support member 3 by the male screw portion 15.

In the clamp 1 in an open state shown in FIG. 1, in a case where the connection member 11 moves toward X1 in the moving direction X with respect to the support member 3, the first arm 5 and the second arm 6 pivotally move so as to approach each other, since the first pin member 9 inserted into the first long hole 7 and the second pin member 10 inserted into the long hole 8 are kept at the same distance. In other words, when the connection member 11 moves toward X1 in the moving direction X, the first arm 5 and the second arm 6 pivotally move so as to approach each other and are disposed to cover outer peripheries of two flanges facing each other (not shown) .

On the other hand, in the clamp 1 in a closed state shown in FIG. 4, in a case where the connection member 11 moves toward X2 in the moving direction X with respect to the support member 3, the first arm 5 and the second arm 6 pivotally move away from each other since the first pin member 9 inserted into the first long hole 7 and the second pin member 10 inserted into the long hole 8 are kept at the same distance. In other words, when the connection member 11 moves toward X2 in the moving direction X, the first arm 5 and the second arm 6 pivotally move away from each other and are shifted from a state of being disposed to cover the outer peripheries of two flanges facing each other (not shown) to a state of not covering the outer peripheries.

By rotating the grip portion 17, the clamp 1 can be shifted from the open state shown in FIG. 1 to the closed state shown in FIG. 4, and vice versa.

As shown in FIG. 3, a third concave portion 22, into which outer peripheries of the two flanges facing each other (not shown) fit, is formed in the connection member 11 on an opposite side to the support member 3. Here, in a case where the clamp 1 is to be attached to the two flanges facing each other (not shown), an after mentioned attaching operation and a fastening operation are performed in a state where the third concave portion 22 contacts and is positioned at a predetermined position of the outer peripheries of the two flanges facing each other. The connection member 11 functions also as a positioning member. In this case, since the connection member 11 is positioned and fixed to the outer peripheries of the two flanges in the fastening operation, the connection member 11 may seem not to move; however, the connection member 11 obviously moves with respect to the support member 3.

The screw mechanism consists of: the female screw portion 13a of the nut 13 fixed to the support member 3; the rod-like male screw portion 15 that is screwed on the female screw portion 13a and whose rotational axis is disposed parallel to the moving direction X; and the grip portion 17 that is disposed at an end portion of the male screw portion 15 on an opposite side to an connection member 11 side.

The male screw portion 15 is rotated by rotating the grip portion 17. The nut 13, with the female screw portion 13a formed therein and on which the male screw portion 15 is screwed, is fixed to the support member 3, so that the length of the male screw portion 15 disposed between the support member 3 and the connection member 11 is changed by rotating the male screw portion 15 by way of the grip portion 17. In other words, by rotating the grip portion 17, an end portion of the male screw portion 15 moves in the moving direction X. That is, the connection member 11, with which an end portion of the male screw portion 15 is in contact, is moved in the moving direction X by rotating the grip portion 17.

Here, a virtual plane formed at a position of the grip portion 17, the virtual plane being vertical to a direction of a rotational axis of the male screw portion 15, essentially does not intersect with a tubular member (described later). In other words, the configuration is such that the tubular member does not interfere with a rotating operation of the grip portion 17. This allows a preferable rotating operation (fastening operation) of the grip portion 17. In addition, there is essentially no limitation regarding maximum diameter of the grip portion. The maximum diameter of the grip portion 17 is only required to be no less than a diameter of the male screw portion 15 and is not particularly limited; however, the maximum diameter is preferably in a range from the diameter of the male screw portion 15 to a length in a width direction of the clamp 1 in a state where the first arm 5 and the second arm 6 are closed. The maximum diameter of the grip portion 17 can be, for example, 32 mm to 50 mm from the viewpoint of operability and size reduction. Since the maximum diameter of the grip portion 17 can be great as described above, the rotating operation (fastening operation) can be performed more preferably.

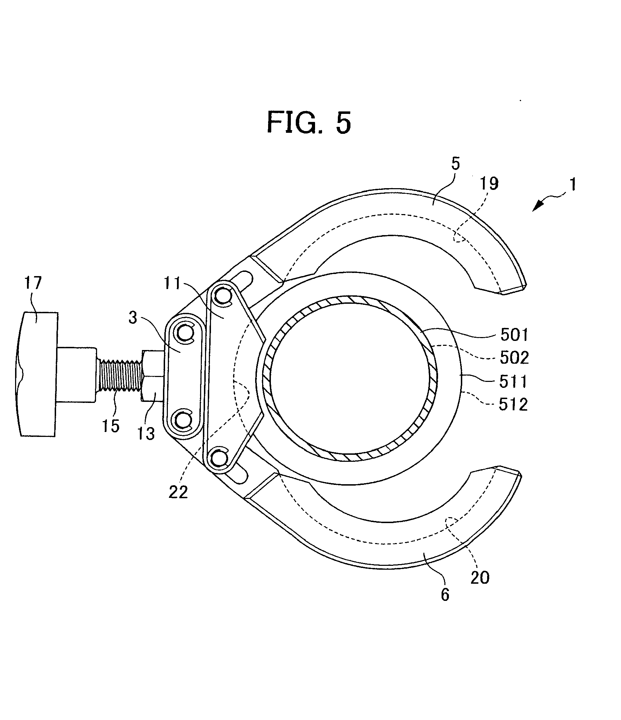

Next, steps for connecting a first tubular member 501 and a second tubular member 502 by way of the clamp 1 are described with reference to FIGS. 5 to 11. More specifically, a process for connecting the first tubular member 501 and the second tubular member 502 by way of the clamp 1 in a state where a first flange 511 formed at an end portion of the first tubular member 501 and a second flange 512 formed at an end portion of the second tubular member 502 are disposed so as to face each other.

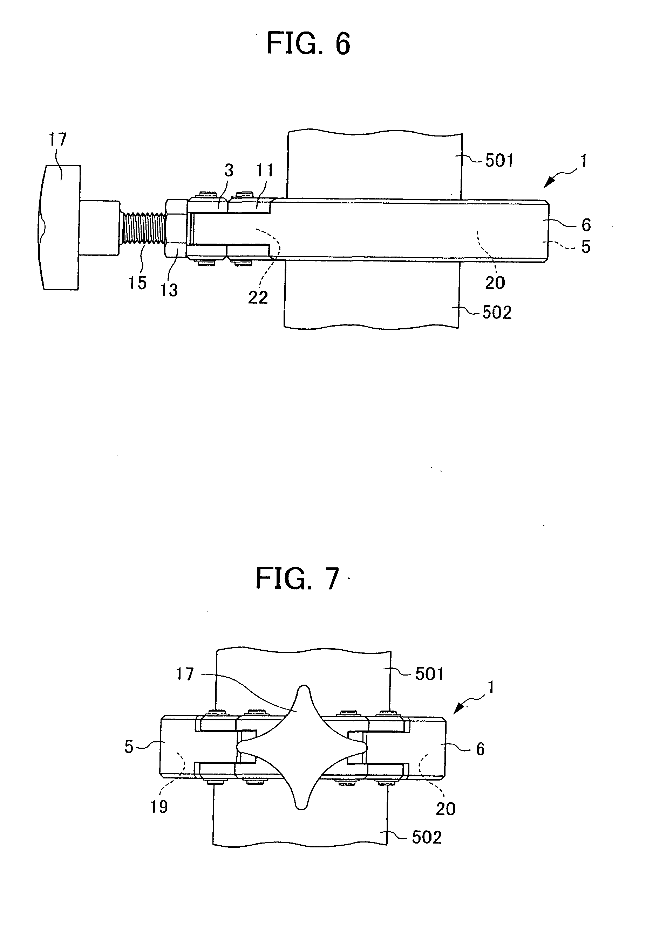

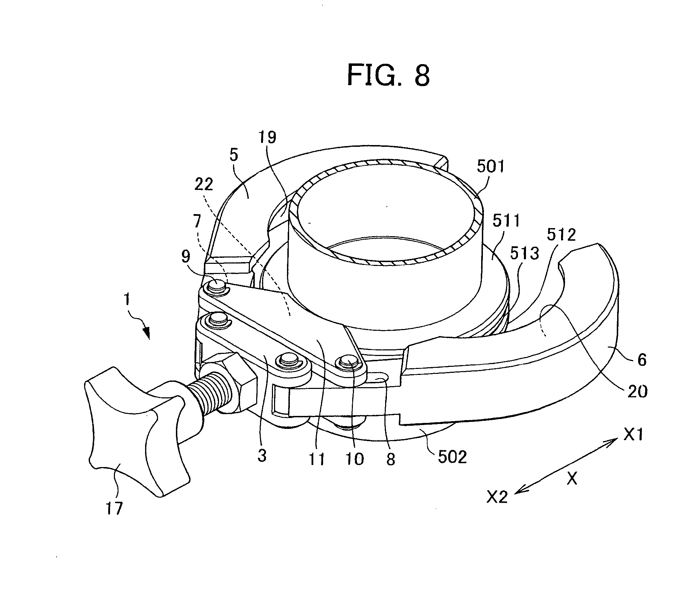

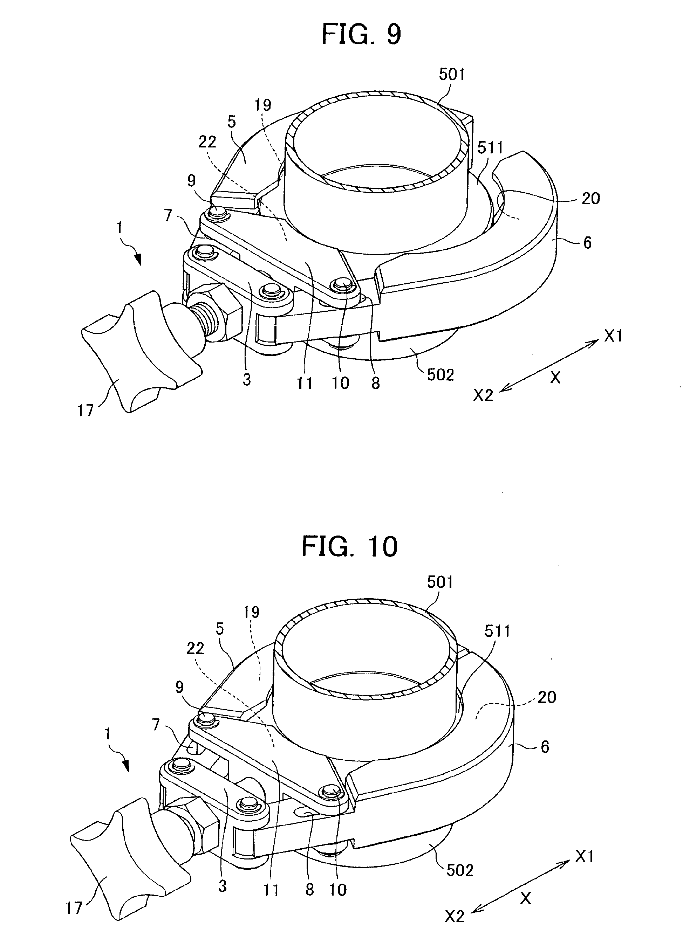

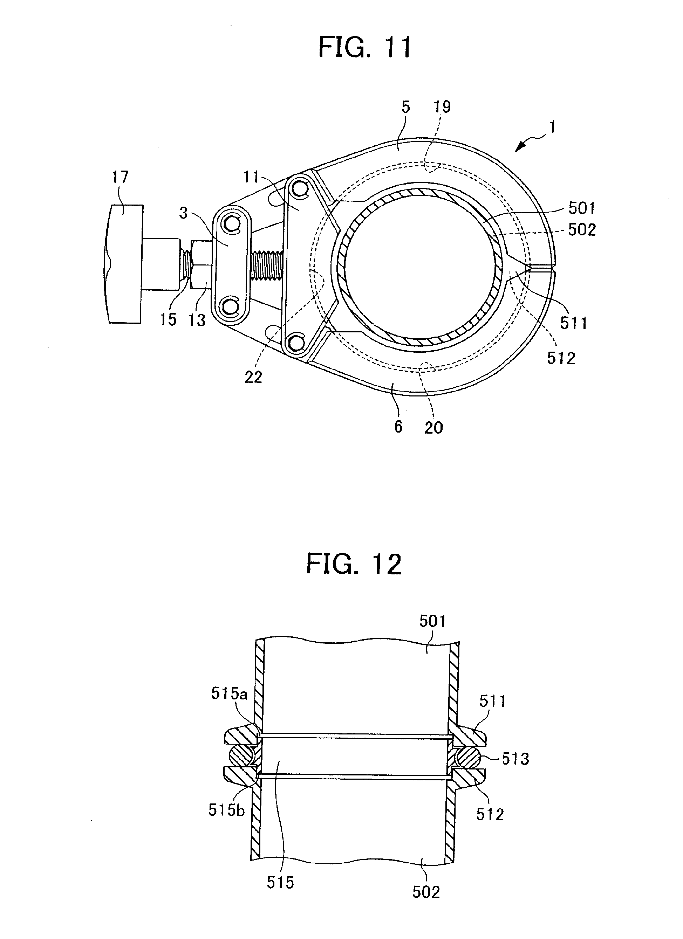

FIG. 5 is a planar view of a state where the clamp 1 in an open state is positioned on a flange of a tubular member. FIG. 6 is a side view of a state where the clamp 1 in an open state is positioned on a flange of the tubular member. FIG. 7 is a side view of a state where the clamp 1 in an open state is positioned on a flange of the tubular member seen from a grip portion 17 side. FIG. 8 is a perspective view of a state where the clamp 1 in an open state is positioned on a flange of the tubular member. FIG. 9 is a perspective view of a state where the clamp 1 in the open state shown in FIG. 8 is being shifted to a closed state. FIG. 10 is a perspective view of a state where the clamp 1 in a closed state (connected state) is disposed so that arms thereof cover the flange of the tubular member. FIG. 11 is a planar view of a state where the clamp 1 in a closed state (connected state) is disposed so that arms thereof cover the flange of the tubular member.

First, as shown in FIGS. 5 to 8, the clamp 1 in an open state is attached to the flanges 511 and 512. More specifically, the clamp 1 is positioned by fitting the third concave portion 22 formed on the connection member 11 at a predetermined position on outer peripheries of the two flanges 511 and 512 that face each other. In such a state, the first arm 5 and the second arm 6 are disposed at an outer side of the flanges 511 and 512 respectively, as shown in FIGS. 6 to 8. More specifically, the first arm 5 and the second arm 6 are each disposed at a position such that, in a case where the first arm 5 and the second arm 6 pivotally move so as to approach each other, the first concave portion 19 formed on the first arm 5 and the second concave portion 20 formed on the second arm 6 fit the flanges 511 and 512 respectively.

Subsequently, the grip portion 17 is rotated in a state where the flanges 511 and 512 fit the third concave portion 22 formed on the connection member 11. By rotating the grip portion 17, an end portion of the male screw portion 15 is moved toward X1 in the moving direction X. More specifically, by rotating the male screw portion 15 by rotating the grip portion 17, the male screw portion 15 screwed on the female screw portion 13a formed on the nut 13 is drawn toward the connection member 11 so that a length thereof on the connection member 11 side becomes longer. As a result, the connection member 11 is pushed out and moved toward X1 in the moving direction X, as shown in FIG. 9.

By moving the connection member 11 toward X1 in the moving direction X, the first pin member 9 and the second pin member 10 fixed to the connection member 11 are each moved toward X1 in the moving direction X while maintaining a distance therebetween. Since the first pin member 9 and the second pin member 10 are inserted into and engaged with the first long hole 7 and the second long hole 8 respectively, the first pin member 9 and the second pin member 10 are guided in a state of being inserted into the first long hole 7 and the second long hole 8 respectively.

Here, the first pin member 9 and the second pin member 10 respectively engaged with the first long hole 7 and the second long hole 8, which are formed so as to be spaced apart from each other as they approach X1 in the moving direction X, are moved toward X1 in the moving direction X while maintaining a distance therebetween, so that the first arm 5 and the second arm 6 are each pivotally moved so as to approach each other. More specifically, the first arm 5 and the second arm 6 are each pivotally moved so as to approach the outer peripheries of the flanges 511 and 512, as shown in FIG. 9.

Thereafter, by further rotating the grip portion 17, the connection member 11 is further moved toward X1 in the moving direction X. As a result, the first arm 5 and the second arm 6 are each pivotally moved to further approach each other. The clamp 1 is then shifted to a closed state as shown in FIGS. 10 and 11.

As shown in FIGS. 10 and 11, the clamp 1 in a closed state forms a substantially circular shape by the first arm 5, the second arm 6, and the connection member 11. As shown in FIGS. 10 and 11, the clamp 1 in a closed state is disposed so that the first arm 5, the second arm 6, and the connection member 11 are disposed to surround the outer peripheries of the flanges 511 and 512. In addition, as shown in FIGS. 10 and 11, in the clamp 1 in a closed state, a tip of the first arm 5 and a tip of the second arm 6 contact each other. Since the tip of the first arm 5 and the tip of the second arm 6 contact each other in a closed state, the first arm 5 and the second arm 6 can be inhibited from contacting the flanges 511 and 512 too strongly even in a case where the grip portion is rotated too strongly.

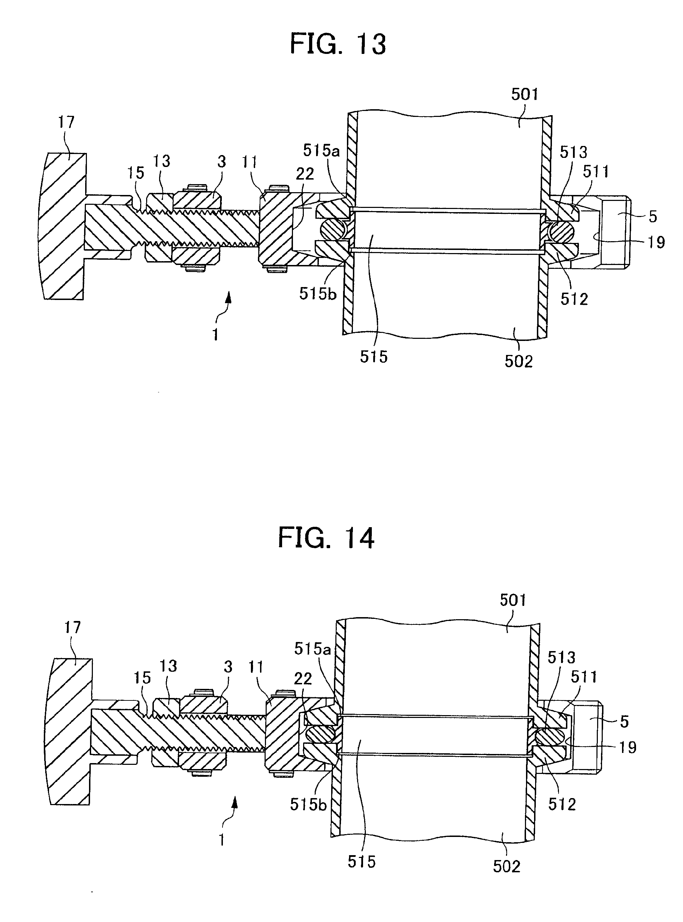

Next, in a case where the clamp 1 is attached to surround the outer peripheries of the flanges 511 and 512, a state of the first tubular member 501 and the second tubular member 502 is described hereinafter with reference to FIGS. 12 to 14. FIG. 12 is a cross-sectional view of a state where a first tubular member and a second tubular member are disposed so that flanges thereof face each other. FIG. 13 is a cross-sectional view of a state where the clamp 1 is attached to outer peripheries of the flanges in FIG. 12. FIG. 14 is a cross-sectional view of a state where the clamp 1 is further shifted to a closed state from a state shown in FIG. 13.

First, as shown in FIG. 12, the first tubular member 501 and the second tubular member 502 are disposed so that the first flange 511 and the second flange 512, which are flange-shaped and formed in an end portion thereof respectively, face each other. The first tubular member 501 and the second tubular member 502 are disposed so as to face each other across a center ring 515 that is disposed such that both ends thereof are placed on a first step portion 515a formed in an end portion of the first tubular member 501 and a second step portion 515b formed in an end portion of the second tubular member 502. In addition, between the first flange 511 and the second flange 512, an O-shaped ring 513 that is elastically deformable is disposed in a state of being placed on an outer face of the center ring 515.

Second, as shown in FIGS. 13 and 14, the connection member 11, the first arm 5 and the second arm 6 are attached to surround the outer peripheries of the flanges 511 and 512. More specifically, by rotating the grip portion 17 in a state where the third concave portion 22 formed on the connection member 11 is fitted at a predetermined position on the outer peripheries of the flanges 511 and 512, as described above, the first arm 5 and the second arm 6 are pivotally moved toward the flanges 511 and 512. As a result, the third concave portion 22, the first concave portion 19 and the second concave portion 20 are disposed to fit to the outer peripheral portions (outer end portions) of the flanges 511 and 512, as shown in FIG. 13. In this state, the O-shaped ring 513 is not deformed and has a completely round cross-section.

Third, by further rotating the grip portion 17, the third concave portion 22, the first concave portion 19 and the second concave portion 20 fit as far as base portions of the flanges 511 and 512, as shown in FIG. 14. Here, the first concave portion 19, the second concave portion 20 and the third concave portion 22 are each formed so that width thereof narrows along a direction of an outer side from an inner side. In other words, the first concave portion 19, the second concave portion 20 and the third concave portion 22 are each formed so that a width thereof narrows in a direction of a bottom face thereof.

As the first concave portion 19, the second concave portion 20, and the third concave portion 22 are thus disposed to fit as far as base portions of the flanges 511 and 512, the clamp 1 is strongly attached to the flanges 511 and 512. In this case, a force for narrowing a distance between the flanges 511 and 512 is applied to the flanges 511 and 512. This narrows a space formed at both ends of the center ring 515 and deforms the O-shaped ring 513 into an oval shape.

According to the present embodiment, the clamp 1 includes: the first arm 5 and the second arm 6 that are pivotably supported by the support member 3; the first long hole 7 and the second long hole 8 as guide portions that are formed in the first arm 5 and the second arm 6 respectively; and the connection member 11 provided with the first pin member 9 and the second pin member 10 engaging with the first long hole 7 and the second long hole 8 respectively, and is configured such that the first arm 5 and the second arm 6 are openable and closable by moving the connection member 11. In such a configuration, the clamp 1 is easily opened and closed by moving the connecting portion by means of a predetermined connecting portion transfer means. Therefore, end portions of tubular members can be easily connected by means of the clamp 1.

According to the present embodiment, since the first arm 5 and the second arm 6 can be opened and closed only by rotating the grip portion 17, an attaching operation and a fastening operation can be performed only from one side of the tubular members. This can easily attach and fasten the clamp 1 to the tubular members. Furthermore, since the clamp 1 can be attached and fastened to the tubular members only by rotating the grip portion 17, the attaching operation and the fastening operation of the clamp 1 can be performed with one hand. Such easy attaching and fastening can alleviate stress of an operator.

Moreover, according to the present embodiment, the operator can perform the fastening operation in a state facing a lateral face of the tubular members, when rotating the grip portion 17 is rotated. This improves operability of the clamp 1 in the fastening process.

In addition, according to the present embodiment, since the attaching operation and the fastening operation are performed in a state where the connection member 11 contacts and is positioned on a flange, the first arm 5 and the second arm 6 can be inhibited from being fastened in a state of being misaligned from the flange. This can easily attach and fasten the clamp 1 to an accurate position by a simple operation. This also can inhibit leakage and the like that can occur in a case where the arms are fastened in a misaligned state. This also can inhibit breakage of the flange and the clamp 1 that can occur in a case where the arms are fastened in a misaligned state.

Furthermore, according to the present embodiment, since the diameter of the grip portion 17 is essentially unlimited, the diameter of the grip portion 17 can be large. This can allow the operator to perform the fastening operation with a small force. Moreover, since the grip portion 17 can be formed in a size and a shape that suits a human hand, operability in the fastening operation can be further improved.

According to the present embodiment, unlike conventional clamps, since a force applied to the first arm 5 and the second arm 6 being fastened on a flange is not concentrated on a screw portion and the like, which can be easily broken, strength of the clamp 1 can be increased.

According to the present embodiment, since the clamp 1 can be attached to and detached from a flange by a simple operation as described above, the clamp 1 can be preferably used in a factory and the like where a maintenance operation is required.

A preferred embodiment of the present invention has been described above; however, the present invention is not limited thereto and can be carried out in various modes. In the present embodiment, the first long hole 7 and the second long hole 8 are described as a guide portion; however, the guide portion is not limited thereto and can be a concave portion. In this case, as an engaging member that engages with the concave portion, a protrusion formed on the connection member 11 can be exemplified.

In the present embodiment, the first long hole 7 and the second long hole 8 as guide members are each formed so that a distance therebetween in a direction Y vertical to the moving direction X becomes greater with movement away from the support member 3; however, the present invention is not limited thereto. The first long hole 7 and the second long hole 8 as guide members can be each formed so that a distance therebetween in a direction Y vertical to the moving direction X becomes smaller with movement away from the support member 3. In this case, contrary to a case of the clamp 1 in the present embodiment, when the connection member 11 moves away from the support member 3 (toward the tubular member), the arms are pivotally moved so that the clamp is shifted to an open state, and when the connection member 11 moves toward the support member, the arms are pivotally moved so that the clamp is shifted to a closed state.

In addition, in the present embodiment, the female screw portion 13a is formed on the nut 13 that is connected to the support member 3; however, the present invention is not limited thereto and the female screw portion 13a can be formed directly on the support member 3.

In addition, in the present embodiment, the grip portion 17 is fixed to an end portion of the male screw portion 15; however, the present invention is not limited thereto and the grip portion 17 can be made detachable. In this case, a single grip portion (member) can be used to fasten a plurality of clamps. Furthermore, since the grip portion 17 is detached in a state where the clamp 1 is fixed to a flange, space can be effectively used. Moreover, the clamp 1 can be reduced in cost.

In addition, in the present embodiment, an operator rotates the grip portion 17 disposed in an end portion of the male screw portion 15 for rotating the male screw portion 17; however, the present invention is not limited thereto. For example, the male screw portion 15 can be mechanically rotated by attaching a rotary drive device such as an electric drill to an end portion of the male screw portion 15.

In addition, in the present embodiment, a screw mechanism is used as a connecting portion transfer means; however, the present invention is not limited thereto. For example, a mechanism, a device and the like that can push the connection member 11 toward X1 in the moving direction X, such as a cylinder mechanism, can be used as a connecting portion transfer means.

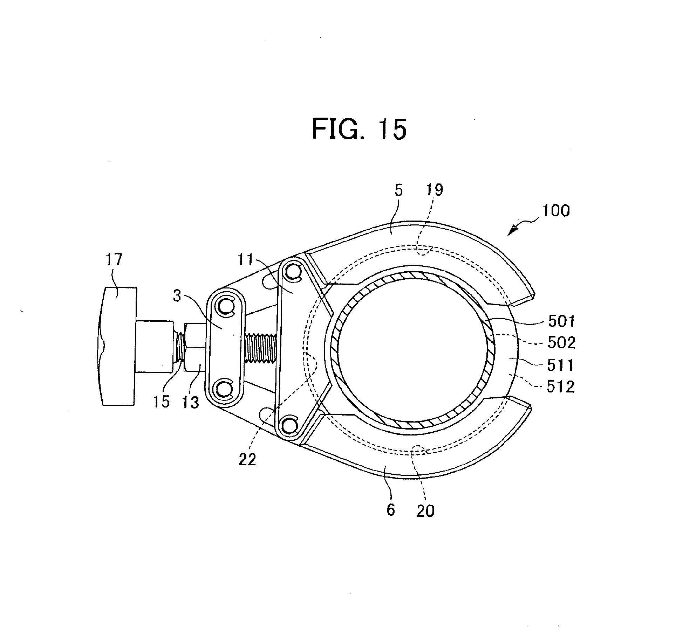

In addition, in the present embodiment, a tip of the first arm 5 and a tip of the second arm 6 are formed to contact in a fastened state; however, the present invention is not limited thereto. For example, as shown in FIG. 15, a first end portion of the first arm on an opposite side to the support member side and a second end portion of the second arm on an opposite side to the support member side can be spaced apart from each other in a state where the first tubular member and the second tubular member are connected by a clamp. In this case, a ratio of a length of outer peripheries of the two flanges disposed between the first end portion and the second end portion can be configured to be no greater than 0.17 with respect to a length of the entire outer peripheries of the two flanges, and preferably in a range of 0.01 to 0.14. In other words, it can be configured such that an open angle formed by a line connecting a central point of the flange and the first end portion and a line connecting the central point and the second end portion is 0 to 60 degrees, preferably 5 to 50 degrees. By thus configuring the length of the first arm and the second arm, the clamp can be attached to a flange even in a case where an aperture of the first arm and the second arm is small. In other words, attachability can be further improved. In addition, as the length of the first arm and the second arm can be reduced, material cost can also be reduced. Manufacturing cost of the clamp can thus be reduced. Furthermore, storage is improved since the entire size of the clamp is reduced.

## Claims

1. A clamp (1) for connecting a first tubular member (501) having a circular flange (511) formed in an end portion thereof with a second tubular member (502) having a circular flange (512) formed in an end portion thereof, in a state where the circular flanges (511, 512) face each other and by covering outer peripheries of the circular flanges (511, 512) with the clamp (1), the clamp (1) comprising:
a support member (3);
a first arm (5) having an end pivotally supported by the support member (3);
a second arm (6) disposed to face the first arm (5), having an end pivotally supported by the support member (3);
a first concave portion (19) formed on the first arm (5) on a side facing the second arm (6) and formed in a curved shape corresponding to the circular flanges (511, 512) to fit a first region along the outer peripheries of the circular flanges (511, 512);
a second concave portion (20) formed on the second arm (6) on a side facing the first arm (5) and formed in a curved shape corresponding to the circular flanges (511, 512) to fit a second region along the outer peripheries of the circular flanges (511, 512);
a connection member (11) connecting the first arm (5) and the second arm (6);
**characterized in that** the clamp (1) further comprises:
a first guide portion (7) formed close to the end of the first arm (5) and engaged with a first end of the connection member (11) through a first engaging member (9); and
a second guide portion (8) formed close to the end of the second arm (6) and engaged with a second end of the connection member (11) through a second engaging member (10);
a third concave portion (22) formed on the connection member (11) on an opposite side to the support member side, to fit a third region along the outer peripheries of the circular flanges (511, 512);
wherein the connection member (11) is movable away from or toward the support member (3) while maintaining a distance between the first engaging member (9) and the second engaging member (10), and
wherein the first guide portion (7) and the second guide portion (8) are each formed of a first long hole (7) and a second long hole (8) respectively such that a distance therebetween in a direction vertical to a moving direction of the connection member (11) becomes greater with movement away from the support member (3); and wherein in a case where the connection member (11) moves away from the support member (3), the first arm (5) and the second arm (6) each pivotally move so as to approach each other; in a case where the connection member (11) moves toward the support member (3), the first arm (5) and the second arm (6) each pivotally move so as to away from each other.

2. The clamp according to claim 1 further comprising a connecting portion transfer means (13, 15, 17) that transfers the connection member (11).

3. The clamp according to claim 2, wherein the connecting portion transfer means (13, 15, 17) includes a female screw portion (13a) that is formed on the support member (3) or on a member fixed to the support member (3), and a male screw portion (15) that is screwed on the female screw portion (13a) and has an end portion in contact with the connection member (11), and is configured so that the connection member (11) is moved away from or toward the support member (3) by rotating the male screw portion (15).

4. The clamp according to claim 1, wherein, in a state where the clamp (1) connects the first tubular member (501) and the second tubular member (502), a first end portion of the first arm (5) on a side having the first concave portion (19) opposite to the support member side and a second end portion of the second arm (6) on a side having the second concave portion (20) opposite to the support member side contact each other.

5. The clamp according to claim 1, wherein, in a state where the clamp (1) connects the first tubular member (501) and the second tubular member (502), a first end portion of the first arm (5) on a side having the first concave portion (19) opposite to the support member side and a second end portion of the second arm (6) on a side having the second concave portion (20) opposite to the support member side are spaced apart from each other, and a ratio of a length of the outer peripheries of the circular flanges (511, 512) disposed between the first end portion and the second end portion is no greater than 0.17 with respect to a length of the entire outer peripheries of the circular flanges (511, 512).

## Patentansprüche

1. Klammer (1) zum Verbinden eines ersten röhrenförmigen Elements (501), das einen kreisförmigen Flansch (511) aufweist, der in einem Endabschnitt desselben gebildet ist, mit einem zweiten röhrenförmigen Element (502), das einen kreisförmigen Flansch (512) aufweist, der in einem Endabschnitt desselben gebildet ist, in einem Zustand, in dem die kreisförmigen Flansche (511, 512) einander gegenüberstehen und durch Abdecken der äußeren Randbereiche der kreisförmigen Flansche (511, 512) mit der Klammer (1), wobei die Klammer (1) Folgendes umfasst:
ein Trägerelement (3);
einen ersten Arm (5), der ein Ende aufweist, das von dem Trägerelement (3) schwenkbar getragen wird;
einen zweiten Arm (6), der gegenüber dem ersten Arm (5) angeordnet ist und ein Ende aufweist, das von dem Trägerelement (3) schwenkbar getragen wird;
einen ersten konkaven Abschnitt (19), der an dem ersten Arm (5) auf einer Seite, die dem zweiten Arm (6) gegenübersteht, gebildet ist und in einer gekrümmten Form gebildet ist, die den kreisförmigen Flanschen (511, 512) entspricht, um in einen ersten Bereich entlang den äußeren Randbereichen der kreisförmigen Flansche (511, 512) zu passen;
einen zweiten konkaven Abschnitt (20), der an dem zweiten Arm (6) auf einer Seite, die dem ersten Arm (5) gegenübersteht, gebildet ist und in einer gekrümmten Form gebildet ist, die den kreisförmigen Flanschen (511, 512) entspricht, um in einen zweiten Bereich entlang den äußeren Randbereichen der kreisförmigen Flansche (511, 512) zu passen;
ein Verbindungselement (11), das den ersten Arm (5) und den zweiten Arm (6) verbindet;
**dadurch gekennzeichnet, dass** die Klammer (1) ferner Folgendes umfasst:
einen ersten Führungsabschnitt (7), der in der Nähe des Endes des ersten Arms (5) gebildet ist und mit einem ersten Ende des Verbindungselements (11) durch ein erstes Eingriffselement (9) in Eingriff steht; und
einen zweiten Führungsabschnitt (8), der in der Nähe des Endes des zweiten Arms (6) gebildet ist und mit einem zweiten Ende des Verbindungselements (11) durch ein zweites Eingriffselement (10) in Eingriff steht;
einen dritten konkaven Abschnitt (22), der an dem Verbindungselement (11) auf einer der Trägerelementseite gegenüberliegenden Seite gebildet ist, um in einen dritten Bereich entlang den äußeren Randbereichen der kreisförmigen Flansche (511, 512) zu passen;
wobei das Verbindungselement (11) zu und von dem Trägerelement (3) bewegbar ist und dabei einen Abstand zwischen dem ersten Eingriffselement (9) und dem zweiten Eingriffselement (10) einhält, und
wobei der erste Führungsabschnitt (7) und der zweite Führungsabschnitt (8) jeweils aus einem ersten Langloch (7) und einem zweiten Langloch (8) gebildet sind, so dass sich ein Abstand dazwischen in einer Richtung senkrecht zu einer Bewegungsrichtung des Verbindungselements (11) mit der sich von dem Trägerelement (3) entfernenden Bewegung vergrößert; und wobei für den Fall, dass sich das Verbindungselement (11) von dem Trägerelement (3) entfernt, der erste Arm (5) und der zweite Arm (6) jeweils schwenkbar bewegen, um sich einander zu nähern; für den Fall, dass sich das Verbindungselement (11) dem Trägerelement (3) nähert, sich der erste Arm (5) und der zweite Arm (6) jeweils schwenkbar bewegen, um sich voneinander zu entfernen.

2. Klammer nach Anspruch 1, ferner umfassend ein Verbindungsabschnitt-Übertragungsmittel (13, 15, 17), welches das Verbindungselement (11) überträgt.

3. Klammer nach Anspruch 2, wobei das Verbindungsabschnitt-Übertragungsmittel (13, 15, 17) einen Innengewindeabschnitt (13a), der auf dem Trägerelement (3) oder auf einem Element, das an dem Trägerelement (3) befestigt ist, gebildet ist, und einen Außengewindeabschnitt (15), der auf den Innengewindeabschnitt (13a) geschraubt wird und einen Endabschnitt in Kontakt mit dem Verbindungselement (11) aufweist und derart konfiguriert ist, dass das Verbindungselement (11) durch Drehen des Außengewindeabschnitts (15) von und zu dem Trägerelement (3) bewegt wird, umfasst.

4. Klammer nach Anspruch 1, wobei in einem Zustand, in dem die Klammer (1) das erste röhrenförmige Element (501) und das zweite röhrenförmige Element (502) verbindet, ein erster Endabschnitt des ersten Arms (5) auf einer Seite, auf welcher der erste konkave Abschnitt (19) der Trägerelementseite gegenüberliegt, und ein zweiter Endabschnitt des zweiten Arms (6) auf einer Seite, auf welcher der zweite konkave Abschnitt (20) der Trägerelementseite gegenüberliegt, einander berühren.

5. Klammer nach Anspruch 1, wobei, in einem Zustand, in dem die Klammer (1) das erste röhrenförmige Element (501) und das zweite röhrenförmige Element (502) verbindet, ein erster Endabschnitt des ersten Arms (5) auf einer Seite, auf welcher der erste konkave Abschnitt (19) der Trägerelementseite gegenüberliegt, und ein zweiter Endabschnitt des zweiten Arms (6) auf einer Seite, auf welcher der zweite konkave Abschnitt (20) der Trägerelementseite gegenüberliegt, voneinander beabstandet sind, und ein Verhältnis einer Länge der äußeren Randbereiche der kreisförmigen Flansche (511, 512), die zwischen dem ersten Endabschnitt und dem zweiten Endabschnitt angeordnet sind, im Verhältnis zu einer Länge der gesamten äußeren Randbereiche der kreisförmigen Flansche (511, 512) nicht größer als 0,17 ist.

## Revendications

1. Dispositif de serrage (1) pour raccorder un premier élément tubulaire (501) comportant une bride circulaire (511), formée dans une partie d'extrémité de celui-ci, avec un second élément tubulaire (502) comportant une bride circulaire (512), formée dans une partie d'extrémité de celui-ci, dans un état où les brides circulaires (511, 512) se font face et en couvrant des périphéries extérieures des brides circulaires (511, 512) avec le dispositif de serrage (1), le dispositif de serrage (1) comprenant :
un élément de support (3) ;
un premier bras (5) comportant une extrémité supportée de façon pivotante par l'élément de support (3) ;
un second bras (6) disposé pour faire face au premier bras (5), comportant une extrémité supportée de façon pivotante par l'élément de support (3) ;
une première partie concave (19) formée sur le premier bras (5) sur un côté faisant face au second bras (6) et présentant une forme incurvée correspondant aux brides circulaires (511, 512) pour s'adapter à une première région le long des périphéries extérieures des brides circulaires (511, 512) ;
une deuxième partie concave (20) formée sur le second bras (6) sur un côté faisant face au premier bras (5) et présentant une forme incurvée correspondant aux brides circulaires (511, 512) pour s'adapter à une deuxième région le long des périphéries extérieures des brides circulaires (511, 512) ;
un élément de raccordement (11) raccordant le premier bras (5) et le second bras (6) ;
**caractérisé en ce que** le dispositif de serrage (1) comprend en outre :
une première partie de guidage (7) formée à proximité de l'extrémité du premier bras (5) et en prise avec une première extrémité de l'élément de raccordement (11) par l'intermédiaire d'un premier élément d'entrée en prise (9) ; et
une seconde partie de guidage (8) formée à proximité de l'extrémité du second bras (6) et en prise avec une seconde extrémité de l'élément de raccordement (11) par l'intermédiaire d'un second élément d'entrée en prise (10) ;
une troisième partie concave (22) formée sur l'élément de raccordement (11), sur un côté opposé par rapport au côté élément de support, pour s'adapter à une troisième région le long des périphéries extérieures des brides circulaires (511, 512) ;
dans lequel l'élément de raccordement (11) est mobile pour s'éloigner ou se rapprocher de l'élément de support (3) tout en maintenant une distance entre le premier élément d'entrée en prise (9) et le second élément d'entrée en prise (10), et dans lequel la première partie de guidage (7) et la seconde partie de guidage (8) sont chacune formées d'un premier trou long (7) et d'un second trou long (8), respectivement, de sorte qu'une distance entre ceux-ci dans une direction verticale à une direction de déplacement de l'élément de raccordement (11) devienne plus importante avec l'éloignement de l'élément de support (3) ; et
dans lequel, au cas où l'élément de raccordement (11) s'éloigne de l'élément de support (3), le premier bras (5) et le second bras (6) se déplacent chacun de façon pivotante afin de se rapprocher l'un de l'autre ;
au cas où l'élément de raccordement (11) se rapproche de l'élément de support (3), le premier bras (5) et le second bras (6) se déplacent chacun de façon pivotante afin d'éloigner l'un de l'autre.

2. Dispositif de serrage selon la revendication 1, comprenant en outre un moyen de transfert de partie de raccordement (13, 15, 17) qui transfère l'élément de raccordement (11).

3. Dispositif de serrage selon la revendication 2, dans lequel le moyen de transfert de partie de raccordement (13, 15, 17) comprend une partie à vis femelle (13a) qui est formée sur l'élément de support (3) ou sur un élément fixé à l'élément de support (3), et une partie à vis mâle (15) qui est vissée sur la partie à vis femelle (13a) et comporte une partie d'extrémité en contact avec l'élément de raccordement (11), et est configurée pour que l'élément de raccordement (11) soit éloigné ou rapproché de l'élément de support (3) en faisant tourner la partie à vis mâle (15).

4. Dispositif de serrage selon la revendication 1, dans lequel, dans un état où le dispositif de serrage (1) raccorde le premier élément tubulaire (501) et le second élément tubulaire (502), une première partie d'extrémité du premier bras (5) sur un côté comportant la première partie concave (19) opposé au côté élément de support et une seconde partie d'extrémité du second bras (6) sur un côté comportant la deuxième partie concave (20) opposé au côté élément de support entrent en contact l'une avec l'autre.

5. Dispositif de serrage selon la revendication 1, dans lequel, dans un état où le dispositif de serrage (1) raccorde le premier élément tubulaire (501) et le second élément tubulaire (502), une première partie d'extrémité du premier bras (5) sur un côté comportant la première partie concave (19) opposé au côté élément de support et une seconde partie d'extrémité du second bras (6) sur un côté comportant la deuxième partie concave (20) opposé au côté élément de support sont espacées l'une de l'autre, et un rapport d'une longueur des périphéries extérieures des brides circulaires (511, 512) disposées entre la première partie d'extrémité et la seconde partie d'extrémité n'est pas supérieur à 0,17 par rapport à une longueur des périphéries extérieures entières des brides circulaires (511, 512).
